# EUROPÄISCHE PATENTANMELDUNG

(11) **EP 4 498 059 A1**
(43) Veröffentlichungstag der Anmeldung: **29.01.2025**
(21) Anmeldenummer: 24180482.2
(22) Anmeldetag: 06.06.2024
(51) Int. Cl.: G01M 15/02

(54) **SYSTEMGRENZENTESTRIG**

(30) Priorität: 28.07.2023 DE 102023120195
(71) Anmelder: GEZE GmbH, 71229 Leonberg (DE)
(72) Erfinder: Elsäßer, Marcel, 70771 Leinfelden-Echterdingen (DE)
(74) Vertreter: Witte, Weller & Partner Patentanwälte mbB

(57) **Zusammenfassung**

Es wird ein Prüfstand zur Prüfung eines Antriebes, mit einer ersten Komponente und einer mit der ersten Komponente verbindbaren zweiten Komponente, für eine drehbare Raumtrenneinrichtung bereitgesellt, der Folgendes umfasst: ein Grundgerüst, eine an dem Grundgerüst angeordnete erste Antriebsaufnahme für die erste Komponente des Antriebes, eine Prüfflügelaufnahme, und einen Prüfflügel, der dazu eingerichtet ist, stellvertretend für die Raumtrenneinrichtung entlang seiner Längsrichtung an einer ersten Seite um eine Drehachse drehbar in der Prüfflügelaufnahme zwischen einer Öffnungsstellung und einer Schließstellung gelagert zu werden, und der an einer zweiten Seite eine zweite Antriebsaufnahme für die zweite Komponente des Antriebes aufweist, wobei der Prüfflügel dazu eingerichtet ist von dem Antrieb mit einem Antriebsdrehmoment um die Drehachse beaufschlagt zu werden, wobei die Orientierung des Prüfflügels in der Schließstellung bezüglich des Grundgerüstes eine Einbaulage definiert. Der Prüfstand umfasst ferner eine Lastvorrichtung, die dazu eingerichtet ist, mit dem Prüfflügel verbunden zu werden und den Prüfflügel mit einem Lastdrehmoment derart zu beaufschlagen, dass eine vorgegebene Gewichtskraft der Raumtrenneinrichtung simuliert wird, wobei das Lastdrehmoment in Abhängigkeit von der Einbaulage und einer Bewegungsrichtung des Prüfflügels zwischen der Öffnungsstellung und der Schließstellung gegenläufig zu oder gleichläufig mit dem Antriebsdrehmoment beaufschlagt wird.

## Beschreibung

Die vorliegende Erfindung betrifft einen Prüfstand bzw. Testrig zur Prüfung eines Antriebes, mit einer ersten Komponente und einer zweiten, mit der ersten verbindbaren, Komponente, für eine um eine Drehachse drehbare Raumtrenneinrichtung, insbesondere ein Fenster oder eine Tür. Mit dem Prüfstand sollen Systemgrenzen der Raumtrenneinrichtung und des Antriebes erfasst werden.

Der Prüfstand umfasst
- ein Grundgerüst,
- eine an dem Grundgerüst angeordnete erste Antriebsaufnahme für die erste Komponente des Antriebes,
- eine Prüfflügelaufnahme, und
- einen Prüfflügel, der dazu eingerichtet ist, stellvertretend für die Raumtrenneinrichtung entlang seiner Längsrichtung an einer ersten Seite um eine Drehachse drehbar in der Prüfflügelaufnahme zwischen einer Öffnungsstellung und einer Schließstellung gelagert zu werden, und der an einer zweiten Seite eine zweite Antriebsaufnahme für die zweite Komponente des Antriebes aufweist, wobei der Prüfflügel dazu eingerichtet ist, von dem Antrieb mit einem Antriebsdrehmoment um die Drehachse beaufschlagt zu werden (wenn die ersten Komponente mit der zweiten Komponente verbunden ist), wobei die Orientierung des Prüfflügels in der Schließstellung bezüglich des Grundgerüstes eine Einbaulage definiert.

Grundsätzlich sind bei der Entwicklung und Herstellung von (automatischen) Tür- oder Fensterantrieben (bzw. allgemein von Antrieben für Raumtrenneinrichtungen jeglicher Art) verschiedenartige Prüfungen durchzuführen, um beispielsweise die Funktionsfähigkeit zu testen, die Lebensdauer zu bestimmen oder bestimmte Messwerte zu ermitteln. Von besonderem Interesse ist das Erkennen von Systemgrenzen. Der Prüfstand muss unter anderem an den Typ des Antriebes, die Montageart, die Einbaulage, die Größe und das Gewicht der Raumtrenneinrichtung angepasst sein.

Aus der DE 10 2017 209 919 B3 ist ein Prüfstand für einen Türschließer oder einen Türantrieb bekannt, wobei der Türschließer oder der Türantrieb eine wandseitige Komponente, eine flügelseitige Komponente und eine bewegliche Hebelanordnung zur Kopplung der wandseitigen Komponente mit der flügelseitigen Komponente aufweist. Der Prüfstand umfasst einen Grundrahmen, eine an dem Grundrahmen angeordnete erste Prüflingsaufnahme, die für eine Befestigung der wandseitigen Komponente ausgebildet ist, eine zweite Prüflingsaufnahme, die für eine Befestigung der flügelseitigen Komponente ausgebildet ist und an einem Prüfflügel angeordnet ist, der mittels einer Gelenk-Anordnung um eine Drehbandachse zwischen einer Öffnungsstellung und einer Schließstellung drehbar am Grundrahmen gelagert ist, und wenigstens einen Sensor zum Erfassen eines Prüfparameters. Weiterhin weist der Prüfstand eine Verstelleinrichtung zur Positionsverstellung der ersten Prüflingsaufnahme, der zweiten Prüflingsaufnahme und/oder eines beweglichen Funktionsbauteils des Prüfflügels auf.

Die Bereitstellung unterschiedlicher Prüfstände ist mit einem hohen Kosten- und Zeitaufwand verbunden. Insbesondere kostet die Konstruktion speziell angepasster Prüfstände für bestimmte Anwendungen ein hohes Maß an Zeit. Insofern besteht der Wunsch nach flexibel einsetzbaren Prüfständen, die in der Lage sind, schnell an neue Prüfaufgaben und -anforderungen angepasst zu werden und dennoch zuverlässige und aussagekräftige Prüfergebnisse liefern.

Es ist eine Aufgabe der Erfindung, die Prüfung von Antrieben für Raumtrenneinrichtungen einfacher, flexibler und effizienter zu gestalten ohne Einbußen bei der Prüfqualität zu riskieren.

Die Lösung der Aufgabe erfolgt durch einen Prüfstand mit den Merkmalen des Anspruchs 1.

Die Erfindung sieht vor, dass der Prüfstand ferner eine Lastvorrichtung umfasst, die dazu eingerichtet ist, mit dem Prüfflügel verbunden zu werden und den Prüfflügel (wenn er mit der Lastvorrichtung verbunden ist) mit einem Lastdrehmoment derart zu beaufschlagen, dass eine vorgegebene Gewichtskraft der Raumtrenneinrichtung simuliert wird. Dabei ist die Lastvorrichtung dazu eingerichtet, das Lastdrehmoment in Abhängigkeit von der Einbaulage und einer Bewegungsrichtung des Prüfflügels zwischen der Öffnungsstellung und der Schließstellung gegenläufig zu oder gleichläufig mit dem Antriebsdrehmoment zu bewirken. Dies ermöglicht die Nachbildung der Wirkung der Gewichtskraft der zu prüfenden Raumtrenneinrichtung auf den Antrieb in effizienter Weise. Aufgrund des Drehmomentes durch die Lastvorrichtung kann die durch den Antrieb in Gang gesetzte Bewegung des Prüfflügels gebremst oder gar behindert oder beschleunigt werden, je nachdem welche Einbaulage der Raumtrenneinrichtung nachgebildet werden soll und ob es sich um einen Schließ- oder Öffnungsvorgang handelt.

Ferner kann die Lastvorrichtung auch dazu eingerichtet sein, die Lage des Schwerpunktes der zu prüfenden Raumtrenneinrichtung entlang ihrer Längsachse und/oder in einer Tiefen- und/oder Breitendimension der Raumtrenneinrichtung bei der Bewirkung des Lastdrehmoments zu berücksichtigen.

Bei einem Dachfenster beispielsweise, dass sich in einem Öffnungsvorgang befindet, wirkt die Gewichtskraft des Dachfensters dem Öffnungsvorgang entgegen, Bei einer Nachbildung der genannten Einbaulage und des Öffnungsvorgangs durch den Prüfflügel, muss die Lastvorrichtung also ein Lastdrehmoment auf den Prüfflügel ausüben, dass gegenläufig zu dem Antriebsdrehmoment ist, um eine Gewichtskraft des Fensters nachbilden zu können. Umgekehrt muss bei einem Schließvorgang das Lastdrehmoment in einer Weise bewirkt werden, dass es gleichläufig mit dem Antriebsdrehmoment ist. Im ersten Fall wirkt die Gewichtskraft als Druckkraft auf den Antrieb, im letzten Fall als Zugkraft. Bei einem Kippfenster wiederum, dass sich in einem Öffnungsvorgang befindet, wirkt die Gewichtskraft als Zugkraft auf den Antrieb. Entsprechend muss bei einer Nachbildung der genannten Situation ein Lastdrehmoment durch die Lastvorrichtung aufgebracht werden, dass gleichläufig mit dem Antriebsdrehmoment ist bzw. das Antriebsdrehmoment unterstützt. Für den Schließvorgang des Kippfensters muss wiederum ein gegenläufiges Drehmoment bewirkt werden.

Insofern kann mit dem Prüfstand simuliert werden, inwiefern sich die Gewichtskraft bzw. das Eigengewicht (der Raumtrenneinrichtung) auf den für die Raumtrenneinrichtung vorgesehen Antrieb auswirkt bzw. wie sich der Antrieb unter Wirkung der Gewichtskraft verhält. Dies kann insbesondere in einem Dauereinsatz getestet werden, indem der Prüfflügel, stellvertretend für die Raumtrenneinrichtung, ständig unter der von der Lastvorrichtung durch das Lastdrehmoment bewirkten Last belastet wird. Mit dem vorliegenden Prüfstand können die Systemgrenzen von Antrieben für Raumtrenneinrichtungen in verschiedenen Einbaulagen und für verschiedene Montagarten bestimmt werden und so wichtige Erkenntnisse für die Verwendung in "echten" Einbausituationen gewonnen werden. Der Prüfstand erlaubt es insbesondere, den Antrieb und den Prüfflügel ohne Applikation, also insbesondere ohne die Verwendung der eigentlichen Raumtrenneinrichtung zu testen.

Üblicherweise wird nämlich als Prüfflügel die Raumtrenneinrichtung selbst herangezogen. Allerdings können Raumtrenneinrichtungen wie Fenster oder Türen unhandliche Größen (und enorme Gewichte) annehmen, sodass die Prüfstände in aufwendiger Art und Weise konzipiert und aufgebaut werden müssen. Da für viele Prüfanwendungen von Antrieben im Wesentlichen die Länge bzw. Höhe (d.h. der Abstand zwischen der Seite, die der Drehachse zugewandt ist, und der Seite, die von der Drehachse abgewandt ist) und das Eigengewicht der anzutreibenden Raumtrenneinrichtung eine Rolle spielt (da eine Hebelwirkung bzw. Drehmomentwirkung auf den Antrieb im Wesentlichen von der Längendimension abhängt), kann als Prüfflügel anstatt der Raumtrenneinrichtung selbst auch ein Prüfflügel gleicher Länge (bzw. Höhe) verwendet werden, der eine völlig andere Breite aufweist.

Insofern kann als Prüfflügel auch ein Prüfarm, insbesondere ein stangenförmiger Prüfarm bzw. eine Stange, verwendet werden, die die gleiche Länge bzw. Höhe wie die Raumtrenneinrichtung aufweist. Dabei ist vorliegend die Länge (oder Höhe) der Raumtrenneinrichtung als die Dimension der Raumtrenneinrichtung in deren Längsrichtung zu verstehen, also der Abstand zwischen der Seite, an der sich die Drehachse befindet, um die sich die Raumtrenneinrichtung dreht, und der dieser Seite gegenüberliegenden Seite, an der (vorliegend) der Antrieb für die Raumtrenneinrichtung vorgesehen ist. Insofern bietet der Prüfstand den Vorteil, dass kein spezielles Fenster oder dergleichen eingebaut werden muss, um dessen Eigenschaften zu testen.

Der stangenförmige Prüfflügel bzw. Prüfarm ist vorzugsweise als längliches Profilelement oder Stange ausgebildet. Der Prüfarm besteht bevorzugt aus Metall, Holz und/oder Kunststoff, also aus Werkstoffen, aus denen auch gängige Raumtrenneinrichtungen bestehen. Der Prüfflügel weist vorzugsweise eine vorbestimmte Länge, beispielsweise von 1 m, auf.

Durch die Verwendung eines Prüfflügels, insbesondere in Form eines stangenförmigen Prüfarmes, anstelle der Raumtrenneinrichtung kann insbesondere Platz eingespart werden. Der Prüfstand kann insofern kompakt gebaut werden und es kann Material eingespart werden. Dementsprechend kann auch Rüstzeit eingespart werden.

Das Verwenden eines Prüfflügels, beispielsweise eines rahmenförmigen Prüfflügels, und insbesondere das Fehlen der Breitendimension der Raumtrenneinrichtung durch die Verwendung lediglich eines Prüfarmes als Prüfflügel hat kann zur Folge haben, dass wesentliche Gewichtsanteile der Raumtrenneinrichtung in dem Prüfstand nicht mehr dargestellt werden können. Um dennoch realistische Prüfergebnisse erzielen zu können, muss dieser Gewichtswegfall in angebrachter Weise kompensiert werden. Vorliegend wird dies durch das Vorsehen der Lastvorrichtung gelöst. Diese ist dazu eingerichtet, mit dem Prüfflügel verbunden zu werden und den Prüfflügel derart mit einem Lastdrehmoment zu beaufschlagen, dass die Gewichtskraft der Raumtrenneinrichtung simuliert wird, also durch das Lastdrehmoment ersetzt wird. Dabei bewirkt die Lastvorrichtung das Lastdrehmoment derart, dass es gegenläufig zu dem Antriebsdrehmoment oder gleichläufig mit dem Antriebdrehmoment ist, und zwar in Abhängigkeit von der Einbaulauge und davon, ob eine Öffnungs- oder Schließvorgang vorliegt. Beispielsweise kann die Lastvorrichtung an der Seite des Prüfflügels angebracht werden, an der sich die Drehachse befindet. Denkbar ist aber auch, dass die Lastvorrichtung an einer anderen Stelle des Prüfflügels, beispielsweise in der Mitte des Prüfflügels, angebracht wird. Die Lastvorrichtung bewirkt, dass ein Drehmoment derart auf den Prüfflügel ausgeübt wird, dass der Prüfflügel sich gegenläufig oder gleichläufig zu der Bewegung, die durch den Antrieb bewirkt wird, bewegt. Mit anderen Worten ist die Lastvorrichtung dazu eingerichtet, gegen den Antrieb zu wirken bzw. die Wirkung des Antriebs auf den Prüfflügel zu mindern bzw. zu unterdrücken oder den Antrieb bzw. dessen Wirkung zu unterstützen. Das Lastdrehmoment wirkt dem Drehmoment durch den Antrieb insofern entgegen oder unterstützt dieses. Dementsprechend kann die Lastvorrichtung den gleichen Effekt wie das Eigengewicht der Raumtrenneinrichtung auf den Antrieb bewirken. Mit anderen Worten wird die Gewichtskraft der Raumtrenneinrichtung über den Lastantrieb als Lastdrehmoment in den Prüfflügel eingeleitet. Die Lastvorrichtung ist mithin dazu eingerichtet bei Verwendung lediglich eines Prüfflügels das Eigengewicht der (eigentlich in dem Prüfstand vorgesehenen) Raumtrenneinrichtung bzw. dessen Wirkung auf den Antrieb in realistischer Weise zu simulieren. Der Prüfstand kann damit insbesondere eine Fensterapplikation realitätsnah simulieren.

Der Prüfflügel ist dazu eingerichtet, entlang seiner Längsrichtung an einer ersten Seite um eine Drehachse drehbar in der Prüfflügelaufnahme gelagert zu werden. Insbesondere ist der Prüfflügel dazu eingerichtet über den Antrieb automatisiert um die Drehachse gedreht werden. Dadurch kann der Prüfflügel zwischen einer Öffnungsstellung und einer Schließstellung bewegt werden und damit einerseits eine Öffnungsstellung des Raumtrennelementes und andererseits eine Schließstellung des Raumtrennelementes nachstellen. In der Schließstellung liegen die Antriebsaufnahme bzw. der Antrieb, der Prüfflügel bzw. der Prüfarm und die Drehachse (und auch die Prüfflügelaufnahme) auf einer Linie. Mit anderen Worten beträgt der Winkel zwischen der Verbindungslinie zwischen Antriebsaufnahme und Drehachse einerseits und dem Prüfflügel (in seiner Längsrichtung) andererseits, also der Öffnungswinkel, in der Schließstellung 0°. In der Öffnungsstellung beträgt der Öffnungswinkel ungleich 0°. Vorzugsweise beträgt der Winkel in der Öffnungsstellung mindestens (+/-) 60°, weiter bevorzugt mindestens (+/-) 70°, noch weiter bevorzugt mindestens (+/-) 90°.

Das Grundgerüst des Prüfstandes besteht vorzugsweise aus mehreren, miteinander verbundenen länglichen Profilelementen, Stangen oder anderen (mechanisch gefertigten) Bauteilen, kann prinzipiell aber auch nur ein Profilelement oder eine Stange, beispielsweise eine vertikale Stange, die am Boden befestigt ist, umfassen. Die länglichen Profilelemente oder Stangen sind vorzugsweise aus Metall, Holz oder Kunststoff hergestellt. Das Grundgerüst ist vorzugsweise ortsfest ausgebildet.

Die erste Antriebsaufnahme befindet sich an dem Grundgerüst und dient der Aufnahme der ersten Komponente des zu testenden Antriebes. In der Regel handelt es sich um eine variabel an dem Grundgerüst anbringbare Konsole, beispielsweise um eine Halterung für die erste Komponente, die an einer Stange, insbesondere einer horizontal oder vertikal verlaufenden Stange, des Grundgerüstes angeordnet ist. Vorzugweise ist die erste Antriebsaufnahme entlang (eines Profilelementes oder einer Stange) des Grundgerüstes verschiebbar oder drehbar an dem Grundgerüst angebracht.

Die Prüfflügelaufnahme (d.h. Prüfarmaufnahme) kann wie die erste Antriebsaufnahme an dem Grundgerüst angeordnet sein. In diesem Fall kann es sich bei der Prüfflügelaufnahme ebenfalls um eine variabel an dem Grundgerüst anbringbare Konsole handeln, beispielsweise um eine Halterung für den Prüfflügel, die an einer Stange, insbesondere eine horizontal oder vertikal verlaufende Stange, des Grundgerüstes angeordnet ist. Vorzugweise ist die Prüfflügelaufnahme (wie die Antriebsaufnahme) verschiebbar oder drehbar an dem Grundgerüst angebracht. Dies hat den Vorteil, dass der Prüfflügel in sehr flexibler Art und Weise, insbesondere in verschiedenen Positionen und Orientierungen (bezüglich des Grundgerüstes), angebracht werden kann und somit möglichst viele Einbausituationen, insbesondere Einbaulagen, von Raumtrenneinrichtungen nachgestellt werden können. Denkbar ist auch, dass die Prüfflügelaufnahme keinen Kontakt zu dem Grundgerüst hat bzw. nicht an diesem angeordnet oder angebracht ist. In diesem Fall ist die Prüfflügelaufnahme vorzugsweise an einem separaten (anderen) Gerüst angebracht, dass sich innerhalb oder außerhalb des Grundgerüstes befindet. Gleichwohl kann die Prüfflügelaufnahme auch dazu vorgesehen sein, an einer Decke oder Wand angebracht zu werden. Die Prüfflügelaufnahme kann dazu eingerichtet sein, den Prüfflügel mittels Befestigungselementen wie Schrauben, Klemmen oder dergleichen aufzunehmen.

Die zweite Antriebaufnahme ist an der zweiten Seite des Prüfflügels bzw. Prüfflügels vorgesehen. Die zweite Seite ist der ersten Seite vorzugsweise gegenüberliegend. Ebenso ist die erste Antriebsaufnahme in der Schließstellung der ersten Seite des Prüfflügels vorzugsweise gegenüberliegend. Die zweite Antriebsaufnahme dient der Aufnahme der zweiten Komponente des zu testenden Antriebes. In der Regel handelt es sich um eine variabel an dem Prüfflügel anbringbare Konsole, beispielsweise um eine Halterung für die zweite Komponente. Vorzugweise ist die zweite Antriebsaufnahme entlang des Prüfflügels verschiebbar oder drehbar an diesem angeordnet.

Wenn es sich bei dem zu prüfenden Antrieb um einen Kettenantrieb handelt, kann die erste Komponente ein Gehäuse samt Motor und Getriebe für den Antrieb einer ebenfalls zugehörigen Kette und die zweite Komponente ein Kettenbock zum Befestigen der Kette sein (oder umgekehrt).

Bei bestimmungsgemäß aufgestelltem Prüfstand ist vorgesehen, dass der Prüfflügel entsprechend der Einbaulage der Raumtrenneinrichtung, deren Antrieb geprüft werden soll, orientiert ist.

Bei der Prüfung eines Kippfensters ist die Prüfflügelaufnahme vorzugsweise so an dem Grundgerüst anzubringen, dass die Drehachse horizontal angeordnet ist und der Prüfflügel (stellvertretend für die Raumtrenneinrichtung) in der Schließstellung vertikal nach oben zeigt.

Bei der Prüfung eines Klappfensters ist die Prüfflügelaufnahme vorzugsweise so an dem Grundgerüst anzubringen, dass die Drehachse horizontal angeordnet ist und der Prüfflügel (stellvertretend für die Raumtrenneinrichtung) in der Schließstellung vertikal nach unten zeigt.

Bei der Prüfung eines Dachfensters (bzw. eines Klappfensters), das an einem Dach mit einer bestimmten Dachneigung angebracht werden soll, ist die Prüfflügelaufnahme vorzugsweise so an dem Grundgerüst anzubringen, dass die Drehachse horizontal angeordnet ist und der Prüfflügel (stellvertretend für die Raumtrenneinrichtung) in der Schließstellung entsprechend der Dachneigung ausgerichtet ist.

Bei der zu prüfenden Raumtrenneinrichtung handelt es sich bevorzugt um ein Fenster.

Gemäß einer bevorzugten Ausgestaltung liegt der Schwerpunkt des Prüfflügels auf der Drehachse. Das bedeutet, dass die Verteilung des Eigengewichtes des Prüfflügels so ausgeglichen ist, dass dieser sich im Gleichgewicht befindet und damit keine (unerwünschten) Kräfte oder Momente auf die Drehachse wirken. Mit anderen Worten ist der Prüfflügel oder Prüfarm vorzugsweise austariert. Dafür kann es vorgesehen sein, dass an der Prüfflügelaufnahme, genauer gesagt, an einer Seite der Prüfflügelaufnahme, die von dem Prüfflügel abgewandt ist, entsprechende Gegengewichte angebracht sind. Weiterhin kann vorgesehen sein, den Prüfflügel mit verschiebbaren Justiergewichten auszustatten, um eine präzise Austarierung zu gewährleisten.

Vorzugsweise umfasst die Lastvorrichtung eine Gewichtsaufnahme zur Aufnahme eines oder mehrerer Gewichte. Beispielsweise kann es sich bei der Lastvorrichtung um einen Schlitten handeln, der entlang der Längsachse (und/oder einer Achse senkrecht dazu in der Flügelebene) des Prüfflügels verfahrbar ist und mit variablen Gewichten ausgestattet werden kann. Mithin kann in dieser Ausführungsform der Prüfflügel an verschiedenen Positionen (entlang seiner Längsrichtung) mit verschiedenen Gewichten belastet werden. Dies ermöglicht es unterschiedlich schwere Raumtrenneinrichtungen und/oder Raumtrenneinrichtungen mit unterschiedlichen Schwerpunktspositionen, d.h. Schwerpunktslagen, nachzubilden.

Bei dem Antrieb des Prüfflügels handelt es sich vorzugsweise um einen Linearantrieb, insbesondere einen Kettenantrieb. Dabei drückt eine Kette (als Teil der ersten oder der zweiten Komponente des Antriebes) den Prüfflügel an seiner zweiten Seite entweder weg von der ersten Antriebsaufnahme (bzw. von der Antriebsachse) oder zieht den Prüfflügel an der zweiten Seite zu der Antriebsaufnahme (bzw. der Antriebsachse) hin, und zwar so, dass der Prüfflügel um die Drehachse (an der ersten Seite) gedreht wird. Grundsätzlich denkbar ist aber auch, dass es sich bei dem Antrieb um einen Riemenantrieb, Scherenantrieb oder Spindelantrieb handelt.

In einer bevorzugten Ausführungsform umfasst der Prüfstand ferner den Antrieb bzw. der Antrieb ist Teil des Prüfstandes. Bevorzugt ist vorgesehen, dass der Lastantrieb einen Motor mit einer drehbaren Motorwelle aufweist und der Prüfflügel an seiner zweiten Seite antriebswirksam (aber nicht unmittelbar, sondern mittelbar (beispielsweise über eine Kette)) mit der Motorwelle oder mit einer Ausgangswelle eines mit dem Motor verbundenen Getriebes gekoppelt ist, wobei die Motorwelle oder die Ausgangswelle des Getriebes die Antriebsachse definieren. Vorzugsweise bewirkt der Antrieb (bei fehlendem bzw. wirkungslosem Lastantrieb, dass sich der Prüfflügel mit mindestens 0,025 °/s und höchstens 8,5 °/s um die Drehachse bewegt, wenn der Prüfflügel 1 m lang ist.

Vorzugsweise ist der Prüfstand, insbesondere die Prüfflügelaufnahme, dazu eingerichtet, Prüfflügel (insbesondere Prüfarme) unterschiedlicher Länge aufzunehmen und/oder einen in Längsrichtung teleskopierbaren Prüfflügel (insbesondere Prüfarm) aufzuweisen. Bei dem teleskopierbaren Prüfflügel kann es sich einen stufenweise oder kontinuierlich teleskopierbaren Prüfflügel handeln. Es bietet sich an, dass das Grundgerüst mit teleskopierbaren Profilelementen oder Stangen ausgestattet ist, um flexibel and unterschiedliche Prüfungsarme angepasst werden zu können. Denkbar ist auch, dass die Prüfflügelaufnahme und die Antriebsaufnahme relativ zueinander bewegt werden können (beispielsweise mit einer Verfahreinrichtung), um den Einsatz von Prüfflügeln verschiedener Länge ermöglichen zu können.

In einer bevorzugten Ausführungsform weist die Lastvorrichtung einen Lastantrieb auf, der dazu eingerichtet, den Prüfflügel mit dem Lastdrehmoment zu beaufschlagen. Der Lastantrieb kann elektrisch, hydraulisch oder pneumatisch sein.

Der Lastantrieb ist bevorzugt derart angeordnet, dass eine Lastantriebsachse des Lastantriebes mit der Drehachse zusammenfällt, also deckungsgleich mit dieser ausgebildet ist bzw. die gleiche Orientierung und Position wie diese aufweist. Der Angriffspunkt der Kraft durch die Lastvorrichtung bzw. den Lastantrieb befindet sich dann an der Drehachse, sodass sich der Hebelarm von der Drehachse aus bis zur zweiten Seite des Prüfflügels erstreckt. Ein solcher Aufbau ist besonders einfach und platzsparend. Grundsätzlich kann aber der Lastantrieb und damit die Lastantriebsachse auch anderweitig angeordnet sein, solange sie die gewünschte Drehung des Prüfflügels um die Drehachse in einer dem Antrieb entgegengesetzten Richtung bewirken.

In einer vorteilhaften Weiterbildung weist der Lastantrieb einen Motor mit einer drehbaren Motorwelle auf und der Prüfflügel ist an seiner ersten Seite antriebswirksam (beispielsweise über die Prüfflügelaufnahme) mit der Motorwelle oder mit einer Ausgangswelle eines mit dem Motor verbundenen Getriebes gekoppelt, wobei die Motorwelle oder die Ausgangswelle des Getriebes die Lastantriebsachse definieren. Insbesondere kann das Getriebe dabei Teil des Lastantriebes sein.

In einer bevorzugten Ausgestaltung umfasst der Lastantrieb eine elastische Kupplung (mit dämpfender Eigenschaft/Wirkung), insbesondere eine vorgespannte elastische Kupplung. Diese ist dazu eingerichtet, eine rutschende Drehmomentübertragung zu ermöglichen. Das bedeutet, dass das Drehmoment nicht direkt über die (starre) Motorwelle (bzw. Ausgangswelle des Getriebes) auf den Prüfflügel übertragen wird, sondern dass es eine gewisse Flexibilität gibt, um beispielsweise Schwingen oder Drehmomentstöße zu kompensieren. Insofern wird ein starr gekoppelter Antriebsstrang vermieden. Bevorzugt handelt es sich bei der elastischen Kupplung (auch drehweiche Kupplung genannt) um eine vorgespannte elastische Kupplung. In jedem Fall kann der Motor bei dieser Ausführungsform die Drehbewegung seiner Welle direkt oder indirekt (über das Getriebe) auf die elastische Kupplung übertragen und diese mithin vorspannen. Abhängig davon wie weit sich die Motorwelle dreht, wird die elastische Kupplung vorgespannt, so dass sie ein entsprechendes Drehmoment auf den Prüfflügel übertragen kann. Die elastische Kupplung umfasst bevorzugt einen elastischen Kunststoff, insbesondere Gummi, wobei die Härte des Kunststoffes bzw. des Gummis den übertragbaren Drehmomentbereich bestimmt.

Bevorzugt deckt der Lastantrieb einen Drehmomentbereich von 0 bis +/- 1500 Nm ab, je nachdem, ob eine Zug- oder Druckkraft durch den Lastantrieb auf den Prüfflügel ausgeübt wird bzw. ausgeübt werden soll. Dieser Bereich reicht in der Regel aus, um mit einer Prüfflügellänge von 1 m die Gewichtskraft gängiger Fenster in realistischer Weise zu simulieren.

In einer weiteren Ausführungsform ist der Prüfstand mit einem zweiten Lastantrieb ausgestattet, wobei der Lastantrieb und der zweite Lastantrieb in einer Betrachtung entlang der Längsachse des Prüfflügels auf gegenüberliegenden Seiten des Prüfflügels angeordnet sind. Mit anderen Worten kann der bereits erwähnte Lastantrieb bei Blickrichtung entlang der Längsachse des Prüfflügels rechts von dem Prüfflügel angeordnet sein und der zweite Prüfflügel links davon angeordnet sein (oder umgekehrt). Der zweite Lastantrieb ist dafür vorgesehen, den bereits vorhandenen Lastantrieb zu unterstützen. Mithin ist vorgesehen, dass der zweite Lastantrieb dazu eingerichtet ist, den Prüfflügel mit einem zweiten Lastdrehmoment zu beaufschlagen. Die Verwendung zweier Lastantriebe bringt den Vorteil, dass das jeweils aufzubringende Lastdrehmoment nur die Hälfte dessen beträgt, was ein einziger Lastantrieb aufbringen müsste, um die gleiche Wirkung zu erzielen.

In einer bevorzugten Ausführungsform ist der Prüfstand ferner mit einer Regelungseinheit ausgestattet, die dazu eingerichtet ist, das Lastdrehmoment in Abhängigkeit von Verhältnis der Länge des Prüfflügels zu einer Länge der Raumtrenneinrichtung; dem Gewicht der zu prüfenden Raumtrenneinrichtung; der Schwerpunktslage der zu prüfenden Raumtrenneinrichtung; einer Position, Orientierung und/oder einem Öffnungswinkel des Prüfflügels zwischen der Öffnungsstellung und der Schließstellung; der Einbaulage; der Position der zweiten Antriebsaufnahme und/oder einer Zeit zu regeln. Die Schwerpunktslage ist dabei als Lage des Schwerpunktes der Raumtrenneinrichtung entlang der Längsrichtung zu verstehen. Bevorzugt umfasst die Schwerpunktslage der Raumtrenneinrichtung auch die Lage des Schwerpunktes in der Tiefendimension der Raumtrenneinrichtung, weiter bevorzugt die Lage des Schwerpunktes in allen drei Raumdimensionen der Raumtrenneinrichtung.

Bei der Regelungseinheit handelt es sich bevorzugt um eine elektronische Regelungseinheit. Die Regelungseinheit umfasst bevorzugt einen Signaleingang zum Empfang von Signalen, die entsprechende Informationen über eines oder mehrere von dem Verhältnis der Länge des Prüfflügels zu einer Länge der Raumtrenneinrichtung; dem Gewicht der zu prüfenden Raumtrenneinrichtung; der Schwerpunktslage der zu prüfenden Raumtrenneinrichtung; einer Position, Orientierung und/oder einem Öffnungswinkel des Prüfflügels zwischen der Öffnungsstellung und der Schließstellung; der Einbaulage; der Position der zweiten Antriebsaufnahme und einer Zeit oder dergleichen umfassen. Insofern kann die Regelungseinheit dazu ausgebildet sein, für eine Simulation bzw. Nachbildung der Wirkung des Eigengewichts der Raumtrenneinrichtung auf den Antrieb eine Bewegung des Prüfflügels durch den Antrieb zu unterstützen oder dieser entgegenzuwirken. Dabei ist grundsätzlich auch denkbar die Wirkung anderer Krafteinflüsse beispielsweise aufgrund externer Kräfte wie Windkraft o.Ä., mit dem Lastantrieb über die Regelungseinheit (zusätzlich) nachzubilden.

Die Regelungseinheit ist vorzugsweise dazu eingerichtet, das Lastdrehmoment in Abhängigkeit von einem vorbestimmten Drehmomentverlauf zu regeln, wobei der vorbestimmte Drehmomentverlauf dazu geeignet ist, die Wirkung der Gewichtskraft des Raumtrennelementes auf das Raumtrennelement und/oder andere Krafteinflüsse auf das Raumtrennelement nachzubilden. Der vorbestimmte Drehmomentverlauf ist vorzugsweise abhängig von einem oder mehreren von einem Verhältnis der Länge des Prüfflügels zu einer Länge der Raumtrenneinrichtung; dem Gewicht der zu prüfenden Raumtrenneinrichtung; der Schwerpunktslage der zu prüfenden Raumtrenneinrichtung; einer Position, Orientierung und/oder einem Öffnungswinkel des Prüfflügels zwischen der Öffnungsstellung und der Schließstellung; der Einbaulage; der Position der zweiten Antriebsaufnahme und/oder einer Zeit. Der vorbestimmte Drehmomentverlauf kann auf eine messtechnische Erfassung an der Raumtrenneinrichtung selbst oder auf eine Modellrechnung zurückgehen.

Es kann vorgesehen sein, dass der Prüfstand ferner einen Lastdrehmomentsensor umfasst, der dazu eingerichtet ist, ein auf den Prüfflügel ausgeübtes Ist-Gegendrehmoment zu erfassen und ein entsprechendes Lastdrehmomentsignal zur Verfügung zu stellen, wobei die Regelungseinheit mit dem Lastdrehmomentsensor in Signalverbindung steht und dazu eingerichtet ist, ein Soll-Gegendrehmoment in Abhängigkeit von dem Lastdrehmomentsignal zu regeln. Insofern ist die Regelungseinheit dazu eingerichtet, den Lastantrieb in Abhängigkeit von dem über den Lastdrehmomentsensor erfassten, tatsächlich vorliegenden Drehmoment (das auf den Prüfflügel von der Lastvorrichtung übertragen wird oder mit welches der Prüfflügel aufweist) (Ist-Drehmoment) zu regeln, so dass dieser ein Soll-Drehmoment vorgibt. Damit kann kontrolliert werden, ob das auf den Prüfflügel ausgeübte Drehmoment derart bemessen ist, dass damit die Gewichtskraft der zu simulierenden Raumtrenneinrichtung realistisch nachgebildet werden kann.

Ferner kann es vorgesehen sein, dass der Prüfstand einen Winkelsensor umfasst, der dazu eingerichtet ist, einen Öffnungswinkel des Prüfflügels zwischen der Öffnungsstellung und der Schließstellung zu erfassen und ein entsprechendes Winkelsignal zur Verfügung zu stellen, wobei die Regelungseinheit mit dem Winkelsensor in Signalverbindung steht und dazu eingerichtet ist, das Lastdrehmoment in Abhängigkeit von dem Winkelsignal zu regeln bzw. den Lastantrieb in Abhängigkeit von dem Winkelsignal zu regeln. Damit kann das Lastdrehmoment an den Öffnungswinkel der Raumtrenneinrichtung angepasst werden und somit das Gewicht der Raumtrenneinrichtung realitätsnäher nachgebildet werden.

In einer besonders bevorzugten Ausführungsform umfasst der Prüfstand ferner eine Verfahreinrichtung, die dazu eingerichtet ist, die Lastvorrichtung in der Längsrichtung zu verfahren bzw. zu bewegen; und/oder die Prüfflügelaufnahme samt Prüfflügel und die erste Antriebsaufnahme aufeinander zu oder voneinander weg zu bewegen. Im ersten Fall kann die Last auf den Prüfflügel entlang der Längsrichtung des Prüfflügels verschoben werden. Damit kann erreicht werden, dass die Wirkungslinie der durch die Lastvorrichtung bewirkten Kraft zur Drehachse hin oder von der Drehachse weg bewegt wird und somit der Hebelarm (orthogonal zur Kraftwirkung auf den zu testenden Antrieb) verlängert oder verkürzt wird. Bei gleich bleibendem Drehmoment kann mithin die effektive bzw. resultierende Kraft, die auf den Prüfflügel ausgeübt wird bzw. werden muss, gesteigert oder verringert werden.

Wenn die Verfahreinrichtung dazu eingerichtet ist, die Prüfflügelaufnahme samt Prüfflügel und die erste Antriebsaufnahme aufeinander zu oder voneinander weg zu bewegen, ist die Verfahreinrichtung besonders bevorzugt dazu eingerichtet, die Prüfflügelaufnahme samt Prüfflügel zu der ersten Antriebsaufnahme hin oder von der ersten Antriebsaufnahme weg zu bewegen; und/oder die erste Antriebsaufnahme zu der Prüfflügelaufnahme hin oder von der Prüfflügelaufnahme weg zu bewegen. Insbesondere ist vorgesehen, dass die Verfahreinrichtung die Drehachse und Antriebsachse (also die Achse des Antriebes) aufeinander zu oder voneinander weg bewegen kann. Insbesondere kann die Verfahreinrichtung dazu eingerichtet sein, die Prüfflügelaufnahme (samt Prüfflügel) in einer horizontalen und/oder vertikalen Richtung zu bewegen.

Mit einer derartigen Verfahreinrichtung kann erreicht werden, dass mit einem Prüfflügel der Länge L nicht nur Raumtrenneinrichtungen der Länge L, sondern auch Raumtrenneinrichtungen mit einer von L unterschiedlichen Länge nachgestellt werden können. Insofern kann mit der Verfahreinrichtung eine "virtuelle Drehachse" für den Prüfflügel geschaffen werden. Mithin kann durch eine Verschiebung der realen Drehachse gegenüber der Antriebsachse eine gegenüber der Antriebsachse feststehende virtuelle Drehachse geschaffen und damit eine virtuelle Verlängerung oder Verkürzung des Prüfflügels erreicht werden, sodass effektiv Raumtrenneinrichtungen unterschiedlicher Länge getestet werden können, obwohl die Länge des Prüfflügels unverändert bleibt bzw. wobei die Länge des Prüfflügels unverändert bleiben kann. Insofern ist ein Austausch oder eine Verlängerung bzw. Verkürzung des Prüfflügels zur Simulation von Raumtrenneinrichtungen anderer Länge nicht mehr notwendig. Die Verfahreinrichtung ist insbesondere dazu eingerichtet die Prüfflügelaufnahme bzw. die Drehachse während der Öffnungs- oder Schließbewegung des Prüfflügels zu verfahren.

Bevorzugt steht die Verfahreinrichtung mit dem Winkelsensor in Signalverbindung und ist dazu eingerichtet, die Prüfflügelaufnahme und/oder die erste Antriebsaufnahme in Abhängigkeit von dem Winkelsignal zu regeln. Damit kann das resultierende Lastdrehmoment auf den Prüfflügel so angepasst werden, dass auch das Gewicht einer Raumtrenneinrichtung, die länger oder kürzer ist als der Prüfflügel, realitätsnah nachgebildet werden.

Gemäß einer Ausführungsform ist die Verfahreinrichtung dazu eingerichtet, den Abstand zwischen der ersten Antriebsaufnahme und der Prüfflügelaufnahme (genauer gesagt der Drehachse) zu vergrößern, wenn die Länge des Prüfflügels kleiner ist als die Länge der Raumtrenneinrichtung, und/oder den Abstand zwischen der ersten Antriebsaufnahme und der Prüfflügelaufnahme (genauer gesagt der Drehachse) zu verringern, wenn die Länge des Prüfflügels größer ist als die Länge der Raumtrenneinrichtung. Dies birgt den Vorteil, dass insbesondere bei zu prüfenden Raumtrenneinrichtungen, die kürzer sind als der Prüfflügel, eine Reduzierung des einzuleitenden Gegendrehmoments erreicht werden kann, da der Prüfflügel durch die Verfahreinrichtung virtuell verkürzt wird bzw. der Hebelarm verringert wird. Mit anderen Worten kann die Schwenkbewegung bzw. Drehbewegung einer Raumtrenneinrichtung die kürzer ist als der Prüfflügel durch eine Überlagerung einer Schwenkbewegung bzw. Drehbewegung und einer Linearbewegung des kürzeren Prüfflügels nachgestellt werden. Für die Nachbildung von Raumtrenneinrichtungen, die länger sind als der Prüfflügel, gelten analoge Überlegungen.

In einer Ausführungsform kann die Verfahreinrichtung einen Linearantrieb, insbesondere einen Spindelantrieb, aufweisen. Gerade Spindelantriebe zeichnen sich durch ihre hohe Genauigkeit bzw. Präzision aus. Unter Verwendung eines Spindelantriebs kann das Verfahren, d.h. Bewegen der Lastvorrichtung, der Prüfflügelaufnahme und/oder der Antriebsaufnahme mit hoher Genauigkeit erfolgen.

Vorzugsweise ist die Regelungseinheit dazu eingerichtet, die Verfahreinrichtung in Abhängigkeit von einem Verhältnis der Länge des Prüfflügels zu einer Länge der Raumtrenneinrichtung; dem Gewicht der zu prüfenden Raumtrenneinrichtung; der Schwerpunktslage der zu prüfenden Raumtrenneinrichtung; einer Position, Orientierung und/oder einem Öffnungswinkel des Prüfflügels zwischen der Öffnungsstellung und der Schließstellung; der Einbaulage, der Position der zweiten Antriebsaufnahme und/oder einer Zeit zu regeln. Als Lastdrehmoment kann sowohl das Ist- als auch das Soll-Lastdrehmoment von der Regelungseinheit verwendet werden, wobei das Ist-Lastdrehmoment zu bevorzugen ist.

Die Regelungseinheit kann ferner dazu eingerichtet sein, ein erhaltenes (Ist-)Lastdrehmomentsignale und/oder Winkelsignal, d.h. Messdaten von Lastdrehmomentsensor und/oder Winkelsensor zu speichern. Selbstverständlich kann die Regelungseinheit auch mit weiteren Sensoren in Verbindung stehen und dazu eingerichtet sein, deren (Mess-)Daten zu speichern.

Die Erfindung betrifft auch ein Verfahren zur Prüfung eines Antriebes, mit einer ersten Komponente und einer mit der ersten Komponente verbundenen zweiten Komponente, für eine drehbare Raumtrenneinrichtung, mit den Schritten
- Bereitstellen eines Grundgerüstes,
- Anordnen einer ersten Antriebsaufnahme für die erste Komponente des Antriebes an dem Grundgerüst,
- Bereitstellen einer Prüfflügelaufnahme, und
- ein um eine Drehachse drehbares Lagern einer ersten Seite in Längsrichtung eines Prüfflügels, stellvertretend für die Raumtrenneinrichtung, in der Prüfflügelaufnahme zwischen einer Öffnungsstellung und einer Schließstellung, Bereitstellen einer zweiten Antriebsaufnahme für die zweite Komponente des Antriebes an einer zweiten, Seite des Prüfflügels, und Beaufschlagen des Prüfflügels mit einem Antriebsdrehmoment um die Drehachse durch den Antrieb (wenn die erste Komponente mit der zweiten Komponente verbunden ist), wobei die Orientierung des Prüfflügels in der Schließstellung bezüglich des Grundgerüstes eine Einbaulage definiert.

Gängigen Verfahren zur Prüfung eines Antriebes sind, insbesondere für Antriebe großer Raumtrenneinrichtungen, mit hohem Kosten-, Zeit- und Materialaufwand verbunden, insbesondere weil die Prüfstände in entsprechender Dimensionierung beschafft und/oder aufgebaut werden müssen und dies ein entsprechendes Maß an Rüstzeit erfordert. Zudem sind Wechsel der Prüflinge beispielsweise zum Testen unterschiedlicher Eigengewichte mit ebenso mit hohem Rüst- und Betreuungsaufwand verbunden.

Erfindungsgemäß umfasst das Verfahren ein Verbinden des Prüflings mit einer Lastvorrichtung und ein Beaufschlagen des Prüfflügels mit einem Lastdrehmoment durch die Lastvorrichtung (wenn Prüfflügel und Lastvorrichtung verbunden sind), so dass eine vorgegebene Gewichtskraft der Raumtrenneinrichtung simuliert wird, wobei das Lastdrehmoment in Abhängigkeit von der Einbaulage und einer Bewegungsrichtung des Prüfflügels zwischen der Öffnungsstellung und der Schließstellung gegenläufig zu oder gleichläufig mit dem Antriebsdrehmoment ist. Mithin kann mit dem erfindungsgemäßen Verfahren erreicht werden, dass nicht mehr die für den Antrieb vorgesehene Raumtrenneinrichtung selbst in den Prüfstand eingebaut werden muss, sondern dass ein einfacher Prüfflügel oder gar Prüfarm ausreicht, um aussagekräftige Testergebnisse zu erzielen. Letztendlich entscheidend für ein valides Prüfverfahren ist, dass die Kinematik der "echten Raumtrenneinrichtung" samt Antrieb mit der Kinematik des Prüfflügels in dem Prüfstand bzw. Systemgrenzentestrig übereinstimmt. Gleiches sollte für die jeweiligen Kräfte an Raumtrenneinrichtung und Prüfflügel gelten. Dies wird mit dem erfindungsgemäßen Verfahren und dem erfindungsgemäßen Prüfstand erreicht.

Weiterbildungen der Erfindung sind auch den abhängigen Ansprüchen, der Beschreibung sowie den beigefügten Zeichnungen entnehmbar.

Nachfolgend wird die Erfindung beispielhaft unter Bezugnahme auf die Zeichnungen beschrieben.
- Fig. 1: ist eine Vorderansicht einer ersten Ausgestaltung eines erfindungsgemäßen Prüfstandes zur Prüfung eines Antriebes für eine drehbare Raumtrenneinrichtung.
- Fig. 2: zeigt die erste Ausgestaltung des erfindungsgemäßen Prüfstandes in perspektivischer Ansicht.
- Fig. 3: ist eine Draufsicht auf einen Ausschnitt der ersten Ausgestaltung des erfindungsgemäßen Prüfstandes.
- Fig. 4: ist eine perspektivische Ansicht auf eine erste Ausgestaltung einer Verfahreinrichtung eines erfindungsgemäßen Prüfstandes.
- Fig. 5: ist eine schematische Darstellung einer zweiten Ausgestaltung eines erfindungsgemäßen Prüfstandes.
- Fig. 6: ist eine Konzeptdarstellung zur Veranschaulichung der Bewegungskurven eines realen Prüfflügels und zweier virtueller Prüfflügel.

Um unterschiedliche Einbaulagen und Längen von Raumtrenneinrichtungen berücksichtigen zu können, ist der Prüfstand 100 in vielfältiger Weise ausführbar bzw. verstellbar, wie nachfolgend genauer ausgeführt wird.

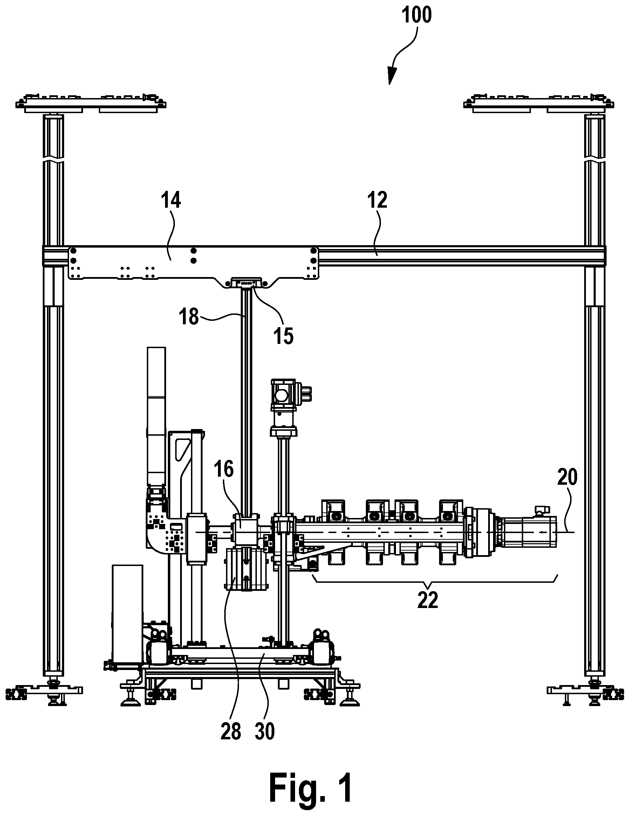

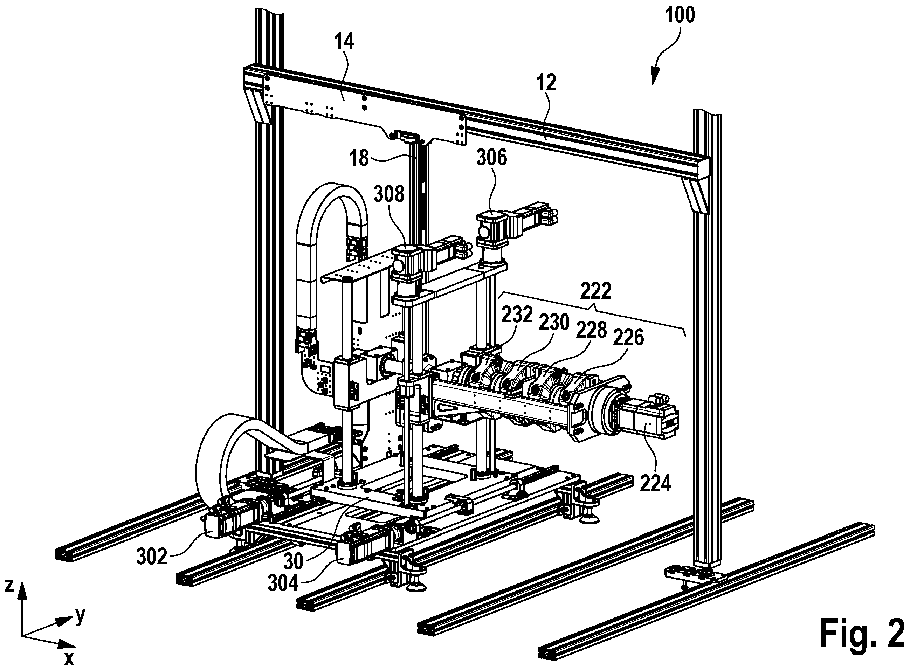

Die in Fig. 1 gezeigte erste Ausgestaltung eines Prüfstandes 100 umfasst ein Grundgerüst 12, das zwei vertikale Stangen, die an einem Boden befestigt sind, und eine horizontale, die beiden vertikalen Stangen verbindende, Stange aufweist. An der horizontalen Stange ist die erste Antriebsaufnahme 14 befestigt. Die erste Antriebsaufnahme 14 ist als Gehäuse ausgestaltet, das den zu prüfenden Antrieb aufnehmen kann, genauer gesagt, die erste Komponente des zu prüfenden Antriebes aufnehmen kann. Bei dem Antrieb handelt es sich vorliegend um einen Kettenantrieb. Insofern umfasst das genannte Gehäuse einen Motor und ein Getriebe sowie eine Kette, die dazu eingerichtet ist von dem Motor bzw. Getriebe aus dem Gehäuse ausgefahren zu werden. Die erste Komponente ist dazu eingerichtet mit der zweiten Komponente des Antriebes, hier einem Kettenbock, verbunden zu werden. Dieser befindet sich in der zweiten Antriebsaufnahme 15, die vorliegend als Befestigungselement an der zweiten Seite des (stangenförmigen) Prüfflügels 18 angebracht ist. Die erste Seite des Prüfflügels 18, die der zweiten Seite gegenüberliegt, ist in der Prüfflügelaufnahme 16 um eine Drehachse 20 drehbar aufgenommen. Die Prüfflügelaufnahme 16 ist in der gezeigten Ausgestaltung vertikal unter der Antriebsaufnahme 14 angeordnet. Der Prüfflügel 18 ist vorliegend in der Schließstellung gezeigt, was in Fig. 2 noch deutlicher erkennbar ist. Dementsprechend ist der gezeigte Prüfstand 100 dafür vorgesehen, den Antrieb für eine Raumtrenneinrichtung zu prüfen, dessen Einbaulage einer Kipplage entspricht. Mit anderen Worten kann mit dem gezeigten Prüfstand 100 beispielsweise ein Kippfenster simuliert werden.

Die Prüfflügelaufnahme 16 umfasst in dieser Ausgestaltung ein Gegengewicht 28, dass dem Prüfflügel 18 über die Drehachse 20 hinweg gegenüber angeordnet ist, um den Prüfflügel 18 in eine austarierte Lage zu versetzen. Mit anderen Worten ist der Prüfflügel 18 in der Prüfflügelaufnahme 16 so gelagert, dass kein Drehmoment auf ihn wirkt. Allerdings kann der Prüfflügel 18 über die auf der Drehachse 20 angeordnete Lastvorrichtung 22, vorliegend ein Lastantrieb 222, mit einem Lastdrehmoment beaufschlagt werden. Gleichzeitig kann der Prüfflügel 18 auf der zweiten Seite durch den Antrieb über die Kette, die mit dem Kettenbock verbunden ist, mit einem Antriebsdrehmoment beaufschlagt werden. Das Antriebsdrehmoment und das Lastdrehmoment sind während des Öffnungsvorganges bzw. einer Öffnungsbewegung des Prüfflügels gleichläufig zueinander. Bei einer Schließbewegung wirken die beiden Momente gegeneinander. Sind Antriebsdrehmoment und Lastdrehmoment während der Schließbewegung gleich, kann sich der Prüfflügel 18 nicht um die Drehachse 10 drehen. Geprüft wird mit dem Prüfstand 100 insbesondere, welches Lastdrehmoment der Antrieb über welchen Zeitraum aushalten kann, ohne Schaden zu nehmen.

Die Lastvorrichtung 22 weist in dieser Ausgestaltung eine Achse auf, die mit der Drehachse 20 zusammenfällt. Der Lastantrieb 22 ist, wie auch die Prüfflügelaufnahme 16 nicht mit dem Grundgerüst 12 verbunden, sondern auf einem separaten Gestell, vorliegend einer Verfahreinrichtung 30, angebracht. Die Verfahreinrichtung 30 ist dazu eingerichtet, die Prüfflügelaufnahme in vertikaler Richtung, d.h. nach unten oder oben, und in horizontaler Richtung nach vorne oder hinten, also in horizontaler Richtung von der Antriebsaufnahme 14 weg oder zu der Antriebsaufnahme 14 hin, zu bewegen.

Wenn die Länge des Prüfflügels 18 der Länge der zu prüfenden Raumtrenneinrichtung entspricht, muss das separate Gestell nicht notwendigerweise als Verfahreinrichtung ausgebildet sein, um das Verhalten der Raumtrenneinrichtung hinreichend realitätsnah simulieren zu können.

Fig. 2 zeigt die erste Ausgestaltung des Prüfstandes 100 in perspektivischer Ansicht. Der Prüfflügel 18 ist in der perspektivischen Ansicht ebenfalls in Schließstellung gezeigt. In der perspektivischen Ansicht sind insbesondere der Lastantrieb 222 und die Verfahreinrichtung 30 detaillierter erkennbar.

Der Lastantrieb 222 umfasst einen Motor 224. Dessen Welle treibt den Prüfflügel bzw. Prüfarm aber nicht direkt an. Vielmehr wird vorliegend die Bewegung des Motors auf vier (elastische bzw. drehweiche) Kupplungen 226, 228, 230 und 232, die ebenfalls Teil des Lastantriebes sind, übertragen, so dass diese vorgespannt werden. Die Stärke der Vorspannung hängt dabei von der Höhe des Drehmoments des Motors 224 ab. Die Kupplungen übertragen das von dem Motor 224 vorgegebene Drehmoment also nicht direkt auf den Prüfflügel 18, sondern "federn" dieses ab. Es handelt sich vorliegend also nicht um einen starr gekoppelten Antriebsstrang, sondern um ein tolerantes System, das in der Lage ist, Drehmomentstöße und dergleichen abzumildern. Der Kraftfluss von Motor 224 zum Prüfflügel 18 geht mithin über die Kupplungen 226, 228, 230 und 232. Obgleich in der gezeigten Ausgestaltung zwei Kupplungspaare, also vier Kupplungen gezeigt sind, können auch mehr oder weniger Kupplungen vorgesehen sein. Es hat sich gezeigt, dass insbesondere das Vorsehen von zwei Kupplungen vorteilhaft ist.

Der Prüfflügel 18 bzw. die Prüflingsaufnahme 16 und der Lastantrieb 22 sind auf vorliegend auf der Verfahreinrichtung 30 angeordnet. Diese ermöglicht ein Verfahren der genannten Teile gegenüber der ersten Antriebsaufnahme 14, und zwar sowohl in horizontaler Richtung (y-Richtung), als auch in vertikaler Richtung (z-Richtung). Dazu umfasst die Verfahreinrichtung 30 zwei horizontale Spindelantriebe 302 und 304 und zwei vertikale Spindelantriebe 306 und 308. Während die horizontalen Spindelantriebe 302 und 304 insbesondere die Prüflingsaufnahme 16 in horizontaler Richtung x zu der ersten Antriebsaufnahme 14 hin oder von dieser wegbewegen können, sind die vertikalen Spindelantriebe dazu vorgesehen, die Prüflingsaufnahme 16 und die erste Antriebsaufnahme 14 in vertikaler Richtung relativ zueinander zu bewegen.

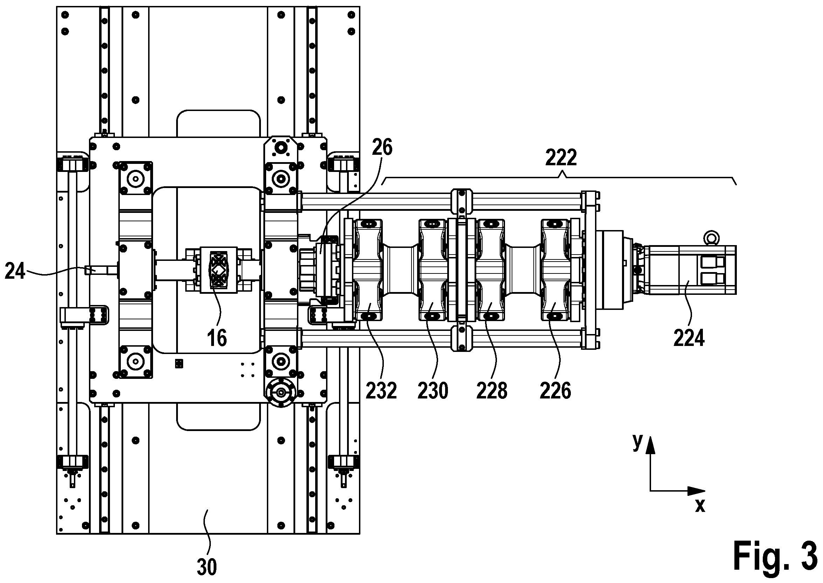

Fig. 3 ist eine Draufsicht auf einen Ausschnitt der ersten Ausgestaltung des erfindungsgemäßen Prüfstandes 100. Der Ausschnitt zeigt insbesondere den Lastantrieb 222 samt Motor 224 und Kupplungen 226, 228, 230 und 232, sowie die Prüfflügelaufnahme 16 ohne aufgenommenen Prüfflügel 18. Die Verfahreinrichtung 30 ist ebenfalls erkennbar. Ferner dargestellt sind ein Winkelsensor 24 und ein Drehmomentsensor 26 bzw. deren Positionen. Der Winkelsensor 24 ist dazu eingerichtet einen Winkel des Prüfflügels 18 gegenüber einer Ebene zu bestimmen, die der Schließstellung des Prüfflügels 18 entspricht. Der Drehmomentsensor 26 ist hinter zwischen den Kupplungen und der Prüflingsaufnahme 16 angeordnet und dazu eingerichtet, das Drehmoment bzw. Ist-Drehmoment des Prüfflügels 18 um die Drehachse 20 zu ermitteln. Das Ist-Drehmoment stimmt nicht notwendigerweise mit dem durch den Lastantrieb vorgegebenen Soll-Drehmoment überein. Dies liegt insbesondere an den drehweichen Kupplungen.

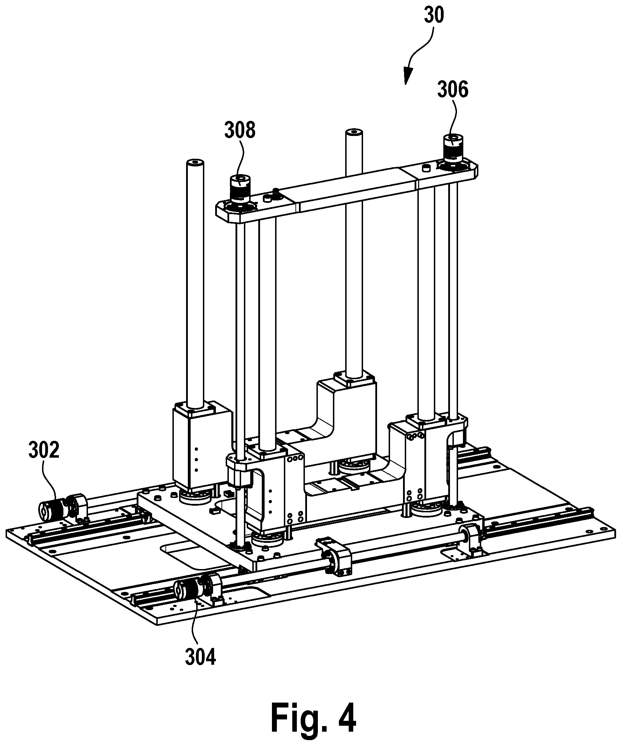

Fig. 4 ist eine perspektivische Ansicht auf eine erste Ausgestaltung einer Verfahreinrichtung 30 eines erfindungsgemäßen Prüfstandes. Die Verfahreinrichtung 30 umfasst einen ersten horizontalen Spindelantrieb 302, einen zweiten horizontalen Spindelantrieb 304 sowie einen ersten vertikalen Spindelantrieb 306 und einen zweiten vertikalen Spindelantrieb 308. Die beiden horizontalen Spindelantriebe sind vorliegend miteinander gekoppelt und mit einer Regelungseinheit (nicht dargestellt) verbunden, die dazu eingerichtet, die Spindelantriebe so anzusteuern, dass sie sich vorzugsweise mit der gleichen Geschwindigkeit bewegen. Bevorzugt ist dies auch für die vertikalen Spindelantriebe der Fall.

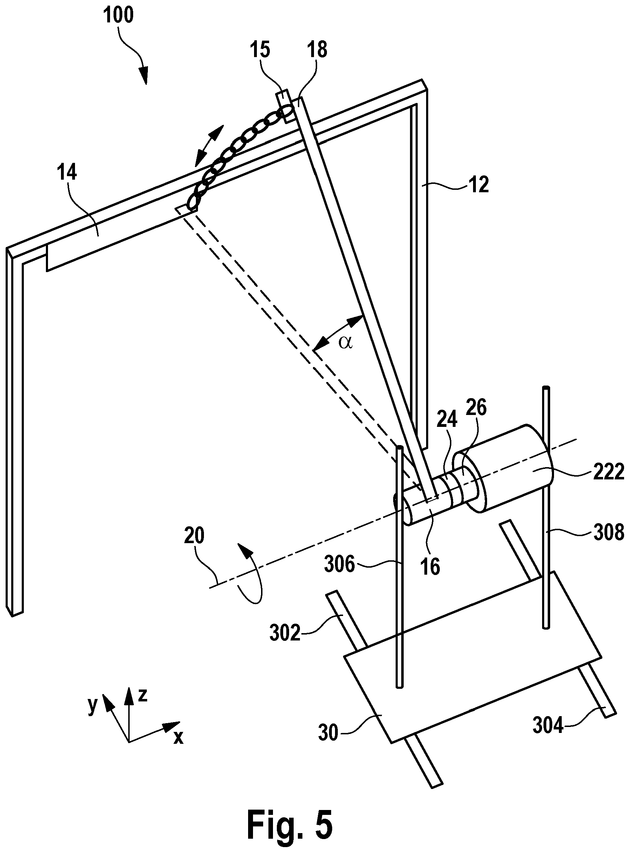

Fig. 5 ist eine perspektivische Ansicht einer zweiten Ausgestaltung eines erfindungsgemä-ßen Prüfstandes 100. Der gezeigte Prüfstand 100 ist dafür vorgesehen, eine Raumtrenneinrichtung in Kipplage zu testen. Gezeigt ist ein Prüfflügel bzw. Prüfarm 18, der ein Kippfenster nachbilden soll. Der Prüfflügel 18 (in Form eines Prüfarmes) ist in einer Öffnungsstellung gezeigt. Die Schließstellung ist durch die gestrichelte Linie angedeutet. Der Öffnungswinkel des Prüfflügels 18 ist mit α bezeichnet.

Die zweite Ausgestaltung ist ähnlich wie die erste Ausgestaltung des Prüfstandes 100 aufgebaut. Bei der Lastvorrichtung handelt es sich um einen Lastantrieb 222. Der Lastantrieb 222 sowie die Prüfflügelaufnahme 16 sind mit Hilfe einer Verfahreinrichtung 30 sowohl in horizontaler Richtung, genauer gesagt in y-Richtung, also auch in vertikaler Richtung, d.h. z-Richtung, beweglich angeordnet. Insbesondere können der Lastantrieb 222 als auch die Prüfflügelaufnahme 16 über vertikal angeordnete Spindelgewinde bzw. Spindelgetriebe 306 und 308 in ihrer Höhe (also in z-Richtung) verfahren werden. Gleichzeitig können der Lastantrieb 222 und die Prüfflügelaufnahme 16 in y-Richtung über in y-Richtung angeordnete Spindelgewinde bzw. Spindelgetriebe 302 und 304 bewegt werden.

An seiner zweiten Seite, die der ersten Seite gegenüberliegt, ist an dem Prüfflügel 18 die zweite Antriebsaufnahme 15 (ein Kettenbock) angeordnet. An diesem ist die Kette, als Teil der ersten Komponente des Antriebes, angebracht. Die zweite Komponente des Antriebes ist in der ersten Antriebsaufnahme an dem Grundgerüst 12 angeordnet. Insofern bewirkt ein Ausfahren der Kette eine Bewegung des Prüfflügels aus der Schließstellung in die Öffnungsstellung (und umgekehrt).

Ferner weist er Prüfstand in der zweiten Ausgestaltung einen Winkelsensor 24 und einen Drehmomentsensor 26 auf.

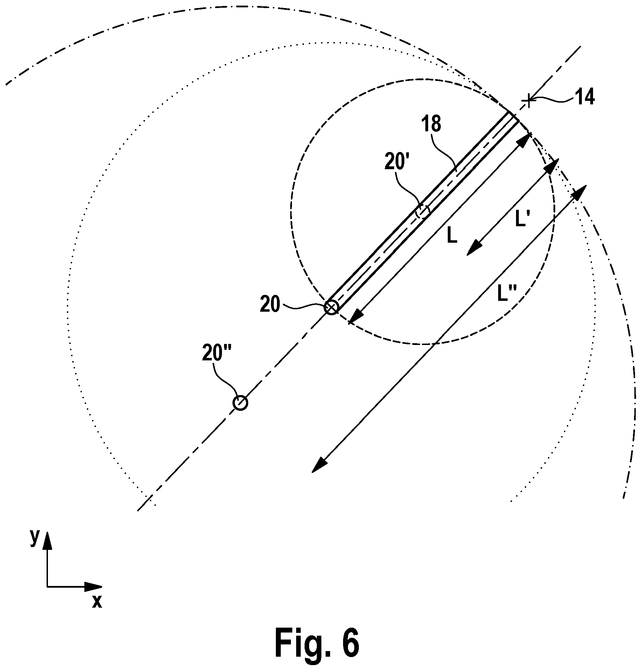

Fig. 6 ist eine Konzeptdarstellung zur Veranschaulichung der Bewegungskurven eines realen Prüfflügels 18 und zweier virtueller Prüfflügel.

Der (reale) Prüfflügel 18 ist um die Drehachse 20 drehbar angeordnet, sodass die gepunktete Linie der Kurve entspricht, die die zweite Seite des Prüfflügels (also die Seite, die von der Drehachse 20 abgewandt ist) bei einer Bewegung um die Drehachse 20 abfahren würde. Solange die Länge L des Prüfflügels der Länge der Raumtrenneinrichtung entspricht, stellt die gepunktete Kurve auch die Linie dar, die die Raumtrenneinrichtung bei Drehung um die Drehachse 20 abfahren würde.

Soll mit dem Prüfflügel 18 der Länge L allerdings die Drehbewegung einer Raumtrenneinrichtung anderer Länge simuliert werden, muss sichergestellt werden, dass der Prüfflügel 18 in der Lage ist, die der genannten Raumtrenneinrichtung zugehörige Bewegungskurve abzufahren. Eine Raumtrenneinrichtung, die nur halb so lang ist wie der Prüfflügel 18, die also eine Länge L' aufweist mit L'= ½ L würde in der gleichen Einbaulage wie die Raumtrenneinrichtung der Länge L die gestrichelte Kurve abfahren (mit ihrem Ende, das von der Drehachse abgewandt ist). Damit der Prüfflügel 18 diese Kurve abfahren kann, muss seine Drehachse in x- und y-Richtung verschoben werden. Mit anderen Worten, muss die Drehachse 20 so verfahren werden, dass ein virtueller, halb so langer Prüfflügel, d.h. ein Prüfflügel der Länge L' geschaffen wird, der sich um eine virtuelle Drehachse 20' dreht. Soll eine Bewegung einer Raumtrenneinrichtung mit Länge L' durch den Prüfflügel 18 mit Länge L im Uhrzeigersinn (bei Draufsicht auf die Bildebene von Fig. 6) nachgebildet werden, muss die Drehachse 20 (von der gezeigten Stellung aus zunächst) nach links und gleichzeitig nach unten verschoben werden. Bei einer Simulation einer Bewegung gegen den Uhrzeigersinn gilt das Gleiche. Mit anderen Worten muss die Drehachse 20 derart verschoben, werden, dass die virtuelle Drehachse 20' im Raum feststeht bzw. gegenüber der ersten Antriebsaufnahme feststeht.

Soll wiederum die Bewegung einer tatsächlich längeren Raumtrenneinrichtung nachgebildet werden, beispielsweise die Bewegung eines Prüfflügels mit Länge L"=3/2 L, so muss die Drehachse 20 während der Drehung derart verschoben werden, dass die virtuelle Drehachse 20" im Raum feststeht bzw. gegenüber der ersten Antriebsaufnahme feststeht. Mit anderen Worten muss die Drehachse 20 so verschoben werden, dass die gezeigte Strich-Punkt-Linie abgefahren werden kann.

Der Abstand zwischen Drehachse 20 und erster Antriebaufnahme (als Kreuz mit der Bezugsziffer 14 dargestellt) muss also vergrößert werden, wenn die Länge des Prüfflügels 18 kleiner ist als die Länge der Raumtrenneinrichtung bzw. die Länge des virtuellen Prüfflügels, während der genannte Abstand verringert werden muss, wenn die Länge des Prüfflügels 18 größer ist als die Länge der zu prüfenden Raumtrenneinrichtung bzw. des virtuellen Prüfflügels.

Die Erfindung ermöglicht bei der Prüfung von Antrieben für Raumtrenneinrichtungen Einsparnisse hinsichtlich Aufwand, Materialkosten, Testzeit und Rüstzeit. Die Aussagekraft der Versuchsergebnisse wird dabei nicht beeinträchtigt.

### Bezugszeichenliste

- 100: Prüfstand
- 12: Grundgerüst
- 14: erste Antriebsaufnahme
- 15: zweite Antriebsaufnahme
- 16: Prüfflügelaufnahme
- 18: Prüfflügel
- 20: Drehachse
- 22: Lastvorrichtung
- 222: Lastantrieb
- 224: Motor
- 226: elastische Kupplung
- 228: elastische Kupplung
- 230: elastische Kupplung
- 232: elastische Kupplung
- 24: Winkelsensor
- 26: Lastdrehmomentsensor/Drehmomentsensor
- 28: Gegengewicht
- 30: Verfahreinrichtung
- 302: erster horizontaler Spindelantrieb
- 304: zweiter horizontaler Spindelantrieb
- 306: erster vertikaler Spindelantrieb
- 308: zweiter vertikaler Spindelantrieb

## Patentansprüche

1. Prüfstand (100) zur Prüfung eines Antriebes, mit einer ersten Komponente und einer mit der ersten Komponente verbindbaren zweiten Komponente, für eine drehbare Raumtrenneinrichtung, mit
- einem Grundgerüst (12),
- einer an dem Grundgerüst (12) angeordneten ersten Antriebsaufnahme (14) für die erste Komponente des Antriebes,
- einer Prüfflügelaufnahme (16), und
- einem Prüfflügel (18), der dazu eingerichtet ist, stellvertretend für die Raumtrenneinrichtung entlang seiner Längsrichtung an einer ersten Seite um eine Drehachse (20) drehbar in der Prüfflügelaufnahme (16) zwischen einer Öffnungsstellung und einer Schließstellung gelagert zu werden, und der an einer zweiten Seite eine zweite Antriebsaufnahme (15) für die zweite Komponente des Antriebes aufweist, wobei der Prüfflügel (18) dazu eingerichtet ist von dem Antrieb mit einem Antriebsdrehmoment um die Drehachse (20) beaufschlagt zu werden, wobei die Orientierung des Prüfflügels (18) in der Schließstellung bezüglich des Grundgerüstes (12) eine Einbaulage definiert,
**dadurch gekennzeichnet, dass** der Prüfstand (100) ferner eine Lastvorrichtung (22) umfasst, die dazu eingerichtet ist, mit dem Prüfflügel (18) verbunden zu werden und den Prüfflügel (18) mit einem Lastdrehmoment derart zu beaufschlagen, dass eine vorgegebene Gewichtskraft der Raumtrenneinrichtung simuliert wird, wobei das Lastdrehmoment in Abhängigkeit von der Einbaulage und einer Bewegungsrichtung des Prüfflügels (18) zwischen der Öffnungsstellung und der Schließstellung gegenläufig zu oder gleichläufig mit dem Antriebsdrehmoment beaufschlagt wird.

2. Prüfstand (100) nach Anspruch 1, wobei der Schwerpunkt des Prüfflügels (18) auf der Drehachse (20) liegt.

3. Prüfstand (100) nach Anspruch 1 oder 2, wobei die Lastvorrichtung (22) eine Gewichtsaufnahme zur Aufnahme eines oder mehrerer Gewichte umfasst.

4. Prüfstand (100) nach einem der vorigen Ansprüche, wobei der Antrieb einen Linearantrieb, insbesondere einen Kettenantrieb, umfasst.

5. Prüfstand (100) nach einem der vorigen Ansprüche, wobei der Prüfstand (100), insbesondere die Prüfflügelaufnahme (16), dazu eingerichtet ist, Prüfflügel (18) unterschiedlicher Länge aufzunehmen und/oder wobei der Prüfflügel (18) in der Längsrichtung teleskopierbar ist.

6. Prüfstand (100) nach einem der vorigen Ansprüche, wobei die Lastvorrichtung (22) einen Lastantrieb (222) aufweist, der dazu eingerichtet ist, den Prüfflügel (18) mit dem Lastdrehmoment zu beaufschlagen, insbesondere
wobei der Lastantrieb (222) so angeordnet ist, dass eine Lastantriebsachse des Lastantriebes (222) mit der Drehachse (20) zusammenfällt, und/oder
wobei der Lastantrieb (222) einen Motor mit einer drehbaren Motorwelle aufweist und wobei der Prüfflügel (18) an seiner ersten Seite antriebswirksam mit der Motorwelle oder mit einer Ausgangswelle eines mit dem Motor verbundenen Getriebes gekoppelt ist.

7. Prüfstand (100) nach Anspruch 6 bis 9, wobei der Lastantrieb (222) einen Drehmomentbereich von 0 bis +/- 1500 Nm abdeckt.

8. Prüfstand (100) nach einem der vorigen Ansprüche, ferner mit einer Regelungseinheit, die dazu eingerichtet ist, das Lastdrehmoment in Abhängigkeit von einem Verhältnis der Länge des Prüfflügels (18) zu einer Länge der Raumtrenneinrichtung; dem Gewicht der zu prüfenden Raumtrenneinrichtung; der Schwerpunktslage der zu prüfenden Raumtrenneinrichtung; einer Position, Orientierung und/oder einem Öffnungswinkel des Prüfflügels (18) zwischen der Öffnungsstellung und der Schließstellung; der Einbaulage, der Position der zweiten Antriebsaufnahme (15) und/oder einer Zeit zu regeln, insbesondere
wobei die Regelungseinheit dazu eingerichtet ist, das Lastdrehmoment in Abhängigkeit von einem vorbestimmten Drehmomentverlauf zu regeln, wobei der vorbestimmte Drehmomentverlauf dazu geeignet ist, die Wirkung der Gewichtskraft des Raumtrennelementes auf das Raumtrennelement und/oder andere Krafteinflüsse auf das Raumtrennelement nachzubilden.

9. Prüfstand (100) nach Anspruch 8, ferner mit einem Lastdrehmomentsensor (26), der dazu eingerichtet ist, ein auf den Prüfflügel (18) ausgeübtes Ist-Gegendrehmoment zu erfassen und ein entsprechendes Lastdrehmomentsignal zur Verfügung zu stellen, wobei die Regelungseinheit mit dem Lastdrehmomentsensor (26) in Signalverbindung steht und dazu eingerichtet ist, ein Soll-Gegendrehmoment in Abhängigkeit von dem Lastdrehmomentsignal zu regeln.

10. Prüfstand (100) nach Anspruch 8 oder 9, ferner mit einem Winkelsensor (24), der dazu eingerichtet ist, einen Öffnungswinkel des Prüfflügels (18) zwischen der Öffnungsstellung und der Schließstellung zu erfassen und ein entsprechendes Winkelsignal zur Verfügung zu stellen, wobei die Regelungseinheit mit dem Winkelsensor (24) in Signalverbindung steht und dazu eingerichtet ist, das Lastdrehmoment in Abhängigkeit von dem Winkelsignal zu regeln.

11. Prüfstand (100) nach einem der vorigen Ansprüche, ferner mit einer Verfahreinrichtung (30), die dazu eingerichtet ist, die Lastvorrichtung (22) in der Längsrichtung zu verfahren; und/oder die Prüfflügelaufnahme (16) samt Prüfflügel (18) und die erste Antriebsaufnahme (14) aufeinander zu oder voneinander weg zu bewegen.

12. Prüfstand (100) nach Anspruch 11, wobei, wenn die Verfahreinrichtung (30) dazu eingerichtet ist, die Prüfflügelaufnahme (16) samt Prüfflügel (18) und die erste Antriebsaufnahme (14) aufeinander zu oder voneinander weg zu bewegen, die Verfahreinrichtung (30) dazu eingerichtet ist, die Prüfflügelaufnahme (16) samt Prüfflügel (14) zu der ersten Antriebsaufnahme (14) hin oder von der ersten Antriebsaufnahme (14) weg zu bewegen; und/oder die erste Antriebsaufnahme (14) zu der Prüfflügelaufnahme (16) hin oder von der Prüfflügelaufnahme (16) weg zu bewegen.

13. Prüfstand (100) nach Anspruch 11 oder 12, wobei wenn die Länge des Prüfflügels (18) kleiner ist als die Länge der Raumtrenneinrichtung, die Verfahreinrichtung (30) dazu eingerichtet ist, den Abstand zwischen der ersten Antriebsaufnahme (14) und der Prüfflügelaufnahme (16) zu vergrößern, und/oder wenn die Länge des Prüfflügels (18) größer ist als die Länge der Raumtrenneinrichtung, den Abstand zwischen der ersten Antriebsaufnahme (14) und der Prüfflügelaufnahme (16) zu verringern.

14. Prüfstand (100) nach einem der Ansprüche 11 bis 13, wobei die Regelungseinheit dazu eingerichtet ist, die Verfahreinrichtung (30) in Abhängigkeit von einem Verhältnis der Länge des Prüfflügels (18) zu einer Länge der Raumtrenneinrichtung; dem Gewicht der zu prüfenden Raumtrenneinrichtung; der Schwerpunktslage der zu prüfenden Raumtrenneinrichtung; einer Position, Orientierung und/oder einem Öffnungswinkel des Prüfflügels (18) zwischen der Öffnungsstellung und der Schließstellung; der Einbaulage; der Position der zweiten Antriebsaufnahme (15) und/oder einer Zeit.

15. Verfahren zur Prüfung eines Antriebes, mit einer ersten Komponente und einer mit der ersten Komponente verbundenen zweiten Komponente, für eine drehbare Raumtrenneinrichtung, mit den Schritten
- Bereitstellen eines Grundgerüstes,
- Anordnen einer ersten Antriebsaufnahme für die erste Komponente des Antriebes an dem Grundgerüst,
- Bereitstellen einer Prüfflügelaufnahme, und
- ein um eine Drehachse drehbares Lagern einer ersten Seite in Längsrichtung eines Prüfflügels, stellvertretend für die Raumtrenneinrichtung, in der Prüfflügelaufnahme zwischen einer Öffnungsstellung und einer Schließstellung, Bereitstellen einer zweiten Antriebsaufnahme für die zweite Komponente des Antriebes an einer zweiten Seite des Prüfflügels und Beaufschlagen des Prüfflügels mit einem Antriebsdrehmoment um die Drehachse durch den Antrieb, wobei die Orientierung des Prüfflügels in der Schließstellung bezüglich des Grundgerüstes eine Einbaulage definiert,
**dadurch gekennzeichnet, dass** das Verfahren ferner ein Verbinden des Prüfflügels mit einer Lastvorrichtung und ein Beaufschlagen des Prüfflügels mit einem Lastdrehmoment durch die Lastvorrichtung umfasst, so dass eine vorgegebene Gewichtskraft der Raumtrenneinrichtung simuliert wird, wobei das Lastdrehmoment in Abhängigkeit von der Einbaulage und einer Bewegungsrichtung des Prüfflügels zwischen der Öffnungsstellung und der Schließstellung gegenläufig zu oder gleichläufig mit dem Antriebsdrehmoment ist.
